# EUROPEAN PATENT APPLICATION

(11) **EP 4 723 697 A1**
(43) Date of publication of application: **08.04.2026**
(21) Application number: 24935795.5
(22) Date of filing: 30.12.2024
(51) Int. Cl.: H04W 8/06

(54) **COMMUNICATION METHODS, COMMUNICATION DEVICE, STORAGE MEDIUM AND COMPUTER PROGRAM PRODUCT**

(30) Priority: 19.04.2024 CN 202410483152
(71) Applicant: ZTE Corporation, Shenzhen, Guangdong 518057 (CN)
(72) Inventor: XING, Zhen, Shenzhen, Guangdong 518057 (CN); YOU, Shilin, Shenzhen, Guangdong 518057 (CN); LIU, Yuze, Shenzhen, Guangdong 518057 (CN); LIU, Peilin, Shenzhen, Guangdong 518057 (CN); ZHANG, Leyi, Shenzhen, Guangdong 518057 (CN)
(74) Representative: Ziebig Hengelhaupt Intellectual Property Attorneys Patentanwaltskanzlei PartGmbB
(86) International application number: PCT/CN2024/143682
(87) International publication number: WO 2025/218267

(57) **Abstract**

Provided in the present disclosure are communication methods, a communication device, a storage medium and a computer program product. A method, which is applied to a unified data management (UDM) network element, includes: in response to a parameter updating of a terminal, acquiring authentication and key management for application (AKMA) service data and an updating reason for a parameter of the terminal; and in response to the AKMA service data indicating that the terminal subscribes to an AKMA service, and the updating reason for the parameter of the terminal being routing indicator updating, sending initial registration request information for the terminal to an access and mobility management function (AMF) network element, wherein the initial registration request information is used to request the terminal to perform initial registration.

## Description

The present disclosure claims priority to Chinese Patent Application No. 202410483152.5, filed on April 19, 2024, which is hereby incorporated by reference in its entirety.

### TECHNICAL FIELD

The present disclosure relates to the technical field of communications, and in particular, to communication methods, a communication device, a storage medium, and a computer program product.

### BACKGROUND

With the rapid development of communication technology, communication security issues are receiving increasing attention from users. At present, terminals may support an authentication and key management for application (AKMA) service, thus authenticated communication may be established between a terminal and an application function (AF) through this service, so as to enhance the communication security.

Based on an AKMA procedure, a terminal side and a network side may each generate AKMA keys and corresponding AKMA key identity identifiers (A-KIDs), and an A-KID may also be referred to as an authentication and key management key-key temporary identifier.

### SUMMARY

In a first aspect, a communication method is provided in the present disclosure, which is applied to a UDM network element. The communication method includes: in response to parameter updating of a terminal, acquiring authentication and key management for application (AKMA) service data and an updating reason for a parameter of the terminal; and in response to the AKMA service data indicating that the terminal subscribes to an AKMA service, and the updating reason for the parameter of the terminal being routing indicator updating, sending initial registration request information for the terminal to an access and mobility management function (AMF) network element, where the initial registration request information is used to request the terminal to perform initial registration.

In a second aspect, a communication method is provided in the present disclosure, which is applied to a terminal. The communication method includes: receiving initial registration request information sent from an AMF network element, where the initial registration request information is sent from a UDM network element in response to parameter updating of the terminal, the terminal subscribing to an AKMA service, and an updating reason for a parameter of the terminal being routing indicator updating; and performing initial registration.

In a third aspect, a communication method is provided in the present disclosure, which is applied to an AMF network element. The communication method includes: in response to parameter updating of a terminal, the terminal subscribing to an AKMA service, and an updating reason for a parameter of the terminal being routing indicator updating, receiving initial registration request information sent from a UDM network element; and sending the initial registration request information to the terminal.

In a fourth aspect, a communication apparatus is provided in the present disclosure. The communication apparatus includes: an acquisition module, configured, in response to parameter updating of a terminal, to acquire authentication and key management for application (AKMA) service data and an updating reason for a parameter of the terminal; and a sending module, configured, in response to the AKMA service data indicating that the terminal subscribes to an AKMA service, and the updating reason for the parameter of the terminal being routing indicator updating, to send initial registration request information for the terminal to an access and mobility management function (AMF) network element, where the initial registration request information is used to request the terminal to perform initial registration.

In a fifth aspect, another communication apparatus is provided in the present disclosure. The communication apparatus includes: a receiving module, configured to receive initial registration request information sent from an AMF network element, where the initial registration request information is sent from a UDM network element in response to parameter updating of the terminal, the terminal subscribing to an AKMA service, and an updating reason for a parameter of the terminal being routing indicator updating; and a processing module, configured to perform initial registration.

In a sixth aspect, a communication apparatus is provided in the present disclosure. The communication apparatus includes: a receiving module, configured, in response to parameter updating of a terminal, the terminal subscribing to an AKMA service, and an updating reason for a parameter of the terminal being routing indicator updating, to receive initial registration request information sent from a UDM network element; and a sending module, configured to send the initial registration request information to the terminal.

In a seventh aspect, a communication device is provided in the present disclosure. The communication device includes: a memory and a processor, where the memory is coupled to the processor, the memory is configured to store instructions executable for the processor, and the processor is configured, upon the instructions being executed, to perform the communication method according to any one of the above-mentioned first aspect, second aspect, or third aspect.

In an eighth aspect, a computer-readable storage medium is provided in the present disclosure. The computer-readable storage medium stores a computer programs that, upon being executed by a processor, the communication method according to any one of the above-mentioned first aspect, second aspect, or third aspect is implemented.

In a ninth aspect, a computer program product including computer instructions is provided. In a case where the computer instructions are executed by a processor, the communication method according to any one of the above-mentioned first aspect, second aspect, or third aspect is implemented.

### BRIEF DESCRIPTION OF THE DRAWINGS

The accompanying drawings are used to provide a further understanding of technical solutions of the present disclosure, and are constituted as a part of the specification, which are used to explain the technical solutions of the present disclosure together with the embodiments of the present disclosure, and do not constitute a limitation on the technical solutions of the present disclosure.
FIG. 1 is a schematic diagram of a network architecture of an AKMA according to the embodiments of the present disclosure.
FIG. 2 is a schematic diagram of a process of updating a parameter of a terminal through a control plane of UDM according to the embodiments of the present disclosure.
FIG. 3 is a flowchart of a communication method according to the embodiments of the present disclosure.
FIG. 4 is a flowchart of another communication method according to the embodiments of the present disclosure.
FIG. 5 is a schematic diagram of an architecture of an AKMA key according to the embodiments of the present disclosure.
FIG. 6 is a flowchart of yet another communication method according to the embodiments of the present disclosure.
FIG. 7 is a schematic diagram of interaction in a communication method according to the embodiments of the present disclosure.
FIG. 8 is a schematic diagram of another process of updating a parameter of a terminal through a control plane of UDM according to the embodiments of the present disclosure.
FIG. 9 is a schematic diagram of composition of a communication apparatus according to the embodiments of the present disclosure.
FIG. 10 is a schematic diagram of composition of another communication apparatus according to the embodiments of the present disclosure.
FIG. 11 is a schematic diagram of composition of yet another communication apparatus according to the embodiments of the present disclosure.
FIG. 12 is a structural schematic diagram of a communication device according to the embodiments of the present disclosure.

### DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a portion of the embodiments of the present disclosure, but not all of the embodiments of the present disclosure. All other embodiments obtained based on the embodiments of the present disclosure by an ordinary person of those skilled in the art without paying any creative effort shall belong to the protection scope of the present disclosure.

Unless otherwise required by the context, throughout the specification and claims, a term "comprise/include" and variations thereof (such as a third person singular form "comprises/includes" and a present participle form "comprising/including") is interpreted as open and inclusive, which means "include, but not limited to." In the description of the specification, terms "one/an embodiment," "some embodiments," "exemplary embodiments," "example," "specific example," or "some examples" are intended to indicate that specific features, structures, materials, or characteristics related to the embodiment or example are included in at least one embodiment or example in the present disclosure. Schematic representations of the above terms do not necessarily refer to the same embodiment(s) or example(s). In addition, the described specific features, structures, materials, or characteristics may be included in any one or more embodiments or examples in any suitable manner.

The terms or wordings such as "first", "second", etc., are merely used for a purpose of description, and are not to be understood as indicating or implying the relative importance or implicitly indicating the number of indicated technical features. Thus, features limited with the wordings of "first", "second", etc., may explicitly or implicitly include one or more of the features. In the description of the present disclosure, unless otherwise specified, wordings "multiple", "a plurality of" or "the plurality of" mean a number of two or more than two.

In the embodiments of the present disclosure, wordings such as "exemplarily" or "for example" and variations thereof are used to represent examples, instances, or illustrations. Any embodiment or design solution described in the embodiments of the present disclosure with wordings such as "exemplarily" or "for example" should not be illustrated as being more preferred or advantageous over other embodiments or design solutions. Specifically, the usage of the wordings such as "exemplarily" or "for example" is intended to present related concepts in a concrete way.

In addition, the usage of the phrase "based on" is meant to be open and inclusive, since a process, step, calculation or other actions that are "based on" one or more of the described conditions or values may, in practice, be based on additional conditions or exceed those described values.

An AKMA service is an important service used to ensure the security and reliability of applications. This service covers various aspects such as user identity authentication, access control, and key generation, key storage, key distribution, key updating, and key destruction. The AKMA service may ensure that only authorized users may access applications by verifying identities of the users, and may further be used to generate and manage a key for encrypting and decrypting data. In addition, an AKMA anchor function (AAnF) may be introduced in a network architecture to generate a session key between UE and AF, as well as corresponding security context. Due to the fact that an A-KID usually needs to be generated based on a routing indicator (RID), in a case where an RID is updated, an A-KID on a terminal side may change accordingly, making it difficult for a network side to correctly position AAnF or unified data management (UDM), and unable to find the AKMA security context of the terminal, thereby affecting the AKMA service.

In view of this, a communication method is provided in the present disclosure, which is applied to a UDM network element, and the method includes: in response to parameter updating of a terminal, acquiring authentication and key management for application (AKMA) service data and an updating reason for a parameter of the terminal; and in response to the AKMA service data indicating that the terminal subscribes to an AKMA service, and the updating reason for the parameter of the terminal being routing indicator updating, sending initial registration request information for the terminal to an access and mobility management function (AMF) network element, where the initial registration request information is used to request the terminal to perform initial registration.

In this way, the terminal may be controlled to perform initial registration in a case of determining the routing indicator updating, thereby triggering to update the AKMA key. In this way, authentication context after the A-KID is changed may remain consistent, and authentication and key management may be completed based on the A-KID, avoiding interruptions or failures of the AKMA service.

Technical solutions provided in the embodiments of the present disclosure may be applied to various mobile communication networks, such as the 5th generation mobile communication technology (5G) communication network, a new radio (NR) mobile communication network using 5G, Internet of Things (IoT), a narrow band Internet of Things (NB-loT), a long term evolution (LTE) communication network, a future mobile communication network (such as 6G or a fused system of various communications), etc., which are not limited in the embodiments of the present disclosure.

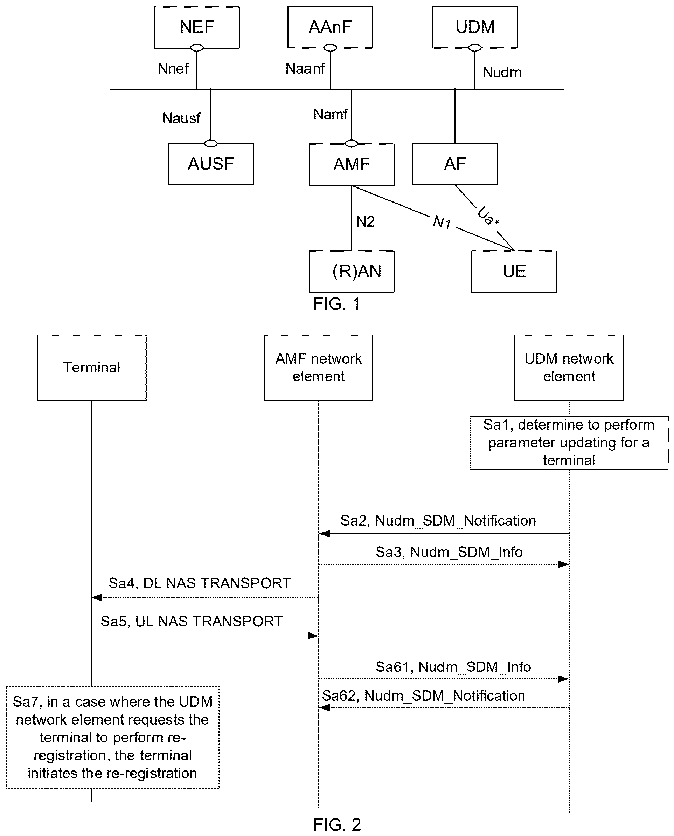

For example, as shown in FIG. 1, a network architecture of AKMA is provided in the present disclosure. The network architecture includes at least terminals, access network (AN), core network, and data service network. Compared with the traditional 5th generation mobile networks (5G) architecture, this network architecture adds a new network function (NF) network element called AAnF network element. The AAnF can may be used to generate a session key between a terminal and an AF network element, as well as maintain corresponding security context. For example, the AAnF network element may be configured to support an AKMA anchor key (K_{AKMA}) and generate an application key (K_{AF}). Moreover, the AAnF network element may be deployed as a standalone NF network element, or may be combined with other NF network elements. It can be understood that FIG. 1 is merely a schematic illustration, and does not serve as a limitation on the present disclosure.

A terminal may be referred to as a terminal device, a user equipment (UE), etc. It is a device with wireless transceiver functions that is capable of communicating with one or more core networks (CNs) through an access network device in a (radio) access network ((R) AN). The terminal may be deployed on land, including indoors or outdoors, handheld or vehicle-mounted; or may also be deployed on water (such as ships, etc.); and may further be deployed in the air (e.g., on airplanes, balloons, satellites, etc.). The terminal may be a mobile phone, a pad, a computer with wireless transceiver functions, a virtual reality (VR) terminal device, an augmented reality (AR) terminal device, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc.

A (radio) access network ((R) AN) is configured to manage wireless resources and provide access services to terminals. An access network device (such as RAN device or AN device) provided in the present disclosure is a device for providing wireless communication functions for a terminal device, which is also referred to as a network device. For example, the access network device may include: a next generation node base station (gNB) in the 5G system, an evolved node B (eNB) in the long term evolution (LTE), a radio network controller (RNC), a node B (NB), a base station controller (BSC), a base transceiver station (BTS), a home base station (e.g., a home evolved node B or a home node B (HNB)), a base band unit (BBU), a transmitting and receiving point (TRP), a transmitting point (TP), a Pico, a mobile switching center, or network devices in future networks, etc. In systems adopting different radio access technologies, names of devices with functions of access network device may be different, and types of access network devices are not limited in the present disclosure.

An access and mobility management function (AMF) is also referred to as an AMF network element, AMF network function or AMF network function entity, and is configured to manage requirements of a user for accessing a network, and is responsible for non-access stratum (NAS) signaling management, access control, and mobility management from a terminal to a network. For example, the AMF network element includes function such as mobility state management, allocating a user temporary identity, authentication, and authorization for a user.

An authentication server function (AUSF) is also referred to as an AUSF network element, AUSF network function, or AUSF network function entity, and is configured for authorization services, generating keys, implementing bidirectional authorization for user devices, and supporting a unified authorization framework. In the embodiments of the present disclosure, the AUSF network element is mainly configured for mutual authentication between UE and network, and generating security keys for use in subsequent procedures.

An application function (AF) is also referred to as an AF network element, AF network function or AF network function entity, and is configured for data routing influenced by applications, accessing network open functions, interacting with policy frameworks for policy control, etc.

A network exposure function (NEF) is also referred to as a NEF network element, NEF network function or NEF network function entity, and is configured for data routing influenced by applications, accessing network open functions, interacting with policy frameworks for policy control, etc.

A unified data management (UDM) is also referred to as a UDM network element, UDM network function, or UDM network function entity, and may be configured for the unified management for user data such as user subscription information, security information, etc., as well as related functions such as user identification, access authorization, and mobility management, etc.

Exemplarily, FIG. 2 is a schematic diagram of a process of updating a parameter of a terminal through a control plane of UDM. As shown in FIG. 2, the process includes the following Sa1-Sa7.

In Sa1, a UDM network element determines to perform parameter updating for a terminal.

In Sa2, the UDM network element sends a Nudm_SDM_Notification message to an AMF network element.

The AMF network element is an AMF network element configured to manage terminals that will perform parameter updating. And the above-mentioned Nudm_SDM_Notification message may be understood as a unified data management service data management notification message, that is, the UDM network element may notify the AMF network element about updating for related parameters of the terminal by calling the Nudm_SDM_Notification service operation.

In some embodiments, the Nudm_SDM_Notification message may include UDM updating data.

The UDM updating data may include UDM updating data related to parameter updating performed by the terminal, indication information on whether the terminal needs to send confirmation information, and indication information on whether the terminal needs to perform re-registration.

In some embodiments, in a case where the parameter updating for the terminal is performed due to "routing indicator updating data" and an updated routing indicator is not supported by the UDM network element currently registered by the AMF network element, the UDM network element should require the terminal to perform re-registration after data is updated. That is, at this time, the UDM updating data may include the indication information that the terminal needs to perform re-registration.

In Sa3, in a case where the AMF network element determines that the terminal is unreachable, the AMF network element send a Nudm_SDM_Info message to the UDM network element.

The Nudm_SDM_Info message may be understood as a request message for unified data management service data management information, that is, the AMF may call the Nudm_SDM_Info service operation to notify the UDM that transmission of parameter updating data for the terminal is unsuccessful. Furthermore, the UDM may consider this process as suspending the UE parameter updating process and skipping the subsequent S4-S7.

In Sa4, the AMF network element sends a DL NAS TRANSPORT message to the terminal.

The terminal is a terminal that needs to perform parameter updating determined by the UDM network element, and the AMF network element may be configured to manage the terminal. The DL NAS TRANSPORT message is a kind of downlink non-access stratum transmission message, and a network side may implement information downlink transmission by sending the DL NAS TRANSPORT message. The DL NAS TRANSPORT message sent from the above-mentioned AMF network element to the terminal includes a transparent container received from the UDM.

The above-mentioned transparent container is a data structure used to encapsulate user subscription data or other related information received from the UDM network elements. These data are transparent to the AMF network element, that is, the AMF network element does not analyze or modify contents in the container, but transmit them as a whole. In some embodiments, the above-mentioned UDM updating data may be included in the transparent container. The AMF network element receives the transparent container from the UDM network element, constructs a DL NAS TRANSPORT message, and takes the transparent container as a part of the message, then sends the DL NAS TRANSPORT message to the terminal.

Thus, the terminal may receive the DL NAS TRANSPORT message. The terminal may verify whether the UDM updating data is provided by HPLMN (Home Public Land Mobile Network), SNPN (Specific Network Public Land Mobile Network), or TTP (Trusted Third Party) based on a preset mechanism. For example, the preset mechanism may be determined based on related technologies, such as the mechanism described in TS 33.501 [15].

If a security check for the UDM updating data by the terminal is successful, the terminal may choose to store these information and use these parameters from then on, or forward these information to a universal subscriber identity module (USIM).

If the security check for the UDM updating data by the terminal fails, the terminal may discard contents of the UDM updating data.

In Sa5, the terminal sends a UL NAS TRANSPORT message including acknowledgement (Ack) information to the AMF network element.

The UL NAS TRANSPORT message is an uplink non-access stratum transmission message, and in a case where the terminal needs to perform uplink information transmission, the uplink transmission of information may be implemented by sending the UL NAS TRANSPORT message. If the security check for the UDM updating data by the terminal is successful and the UDM network element requests the terminal to send a confirmation information to the UDM network element, the terminal may transmit the UL NAS TRANSPORT messages including Ack information to the AMF network element to implement the uplink transmission of Ack information.

In Sa61, the AMF network element sends a Nudm_SDM_lnfo request message to the UDM network element.

The Nudm_SDM_lnfo request message may include or carry the Ack information from the terminal.

In a case where the AMF receives a UL NAS TRANSPORT message carrying a transparent container from the terminal, and the transparent container carries the Ack information from the terminal, the AMF may send a Nudm_SDM_Info request message to UDM with taking the transparent container in the Nudm_SDM_Info request message.

In Sa62, the UDM network element sends Nudm_SDM_Notification message to the AMF network element.

If the parameter updating for the terminal is performed due to "routing indicator updating data," and the UDM currently registered by the AMF also supports an updated routing indicator, the UDM network element may request the terminal to send a confirmation information, but does not require the terminal to perform re-registration. After the UDM network element receives the transparent container indicating successful reception, the UDM network element should trigger a Nudm_SDM_Notification service operation to update a terminal context in the AMF with the updated routing indicator data.

In some embodiments, the UDM network element may also indicate other NFs (such as a session management function (SMF), short message service function (SMSF)) for updating of the routing indicator assigned to SUPI (Subscription Permanent Identifier) by calling the Nudm_SDM_Notification service operation.

In Sa7, in a case where the UDM network element requests the terminal to perform re-registration, the terminal initiates the re-registration.

If the UDM requests UE to perform the re-registration, the terminal may wait until it returns to a radio resource control idle (RRC_IDLE) state, and then initiate a registration process. The registration process may be a registration process described in related standards such as TS 24.501 standard.

The Nausf, Nudm, Namf, Nnef, Naanf, NI, N2, and Ua* in FIG. 1 are all interface serial numbers. The meanings of these interface serial numbers may refer to the meanings defined in the related standard protocols, which will not be explained one by one herein. Moreover, in FIG. 1, only taking the terminal being used as the UE for illustrative purposes, and the interface names between various network functions in FIG. 1 are only examples. In actual implementation, the interface names of the system architecture may also be other names, which are not limited in the present disclosure.

It should be noted that FIG. 1 is only an exemplary framework diagram, and a number of devices or network elements included in FIG. 1, as well as the names of various devices or network elements, are not limited. In addition to the devices or network elements shown in FIG. 1, other devices or network elements may also be included.

Application scenarios of the embodiments of the present disclosure are not limited. The system architecture and service scenarios described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art may appreciate that with the evolution of network architecture and the emergence of new service scenarios, the technical solutions provided in the embodiments of the present disclosure are also applicable to similar technical problems.

The method provided in the present disclosure may be illustrated below in detail in combination with the accompanying drawings of the specification.

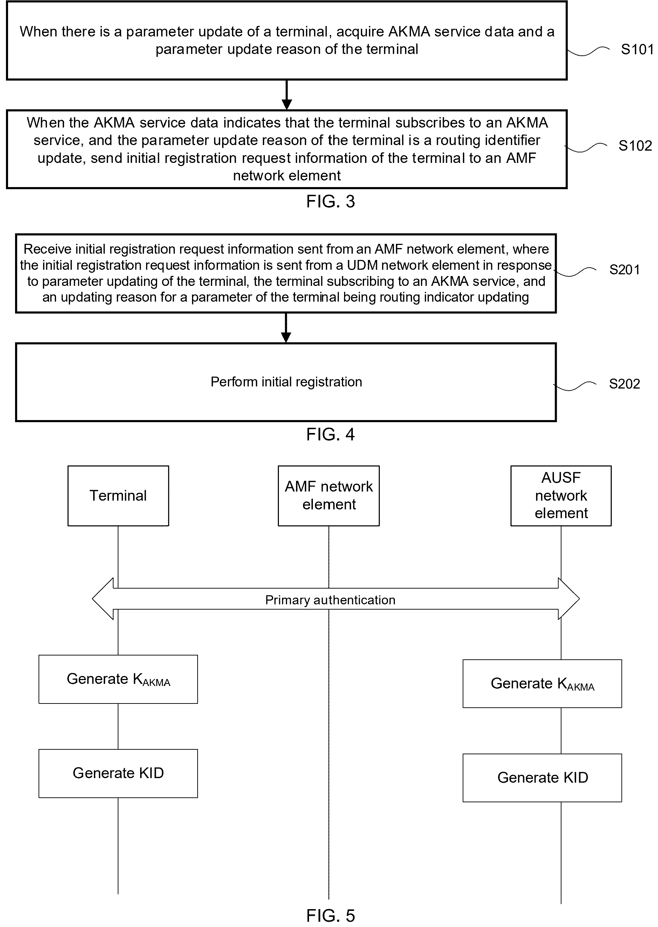

As shown in FIG. 3, a communication method is provided in the embodiments of the present disclosure, which is applied to a UDM network element. The communication method includes the following S101-S102.

In S101, in response to parameter updating of a terminal, AKMA service data and an updating reason for a parameter of the terminal are acquired.

In some embodiments, the AKMA service data may include data for indicating whether the terminal corresponding to the UDM network element subscribes to an AKMA service, such as subscription state data, subscriber identifier data, etc.

Exemplarily, the AKMA service data may also include one or more of service configuration data, a security context, service state data, authentication key data, or other data. The service configuration data may include a parameter configuration for the AKMA service, such as a validity term of an authentication key, an update policy, and a used encryption algorithm, etc. The security context refers to information that may be used to implement data security protection (such as encryption/decryption, and/or integrity protection/verification). Exemplarily, the security context may include an encryption key, an integrity protection password, etc. The service state data may include a current state of the AKMA service (such as whether the AKMA service is activated, paused, etc.). The authentication key data may be used for a key itself for terminal authentication and its related attributes, such as a version number, a generation time, a usage restriction of the key, etc. It should be understood that the above contents are only exemplary illustrations for the AKMA service data. In practical applications, the AKMA service data may vary depending on the actual service requirements of the network architecture. For example, the AKMA service data may further include a key updating record, a service usage record, etc.

In some embodiments, the UDM network element may retrieve and acquire the AKMA service data from a data storage.

Exemplarily, the UDM network element may typically maintain a database or data storage system for storing various kinds of information related to subscribers, and the information may include the AKMA service data. Therefore, in a case where the UDM network element needs to acquire the AKMA service data, the UDM may retrieve corresponding data from its internal database.

In some embodiments, the UDM network elements may acquire the AKMA service data from other network functional elements (such as AMF, SMF, or other network elements).

For example, network elements with other network functions (such as AMF, SMF, or other network elements) may collect authentication and key information related to the terminal (i.e., the AKMA service data) during a interaction process with the terminal, and may forward the collected AKMA service data to the UDM network element.

In some embodiments, the UDM network element may further acquire the AKMA service data from a data source used for generating, distributing, and managing authentication keys, such as an authentication server and a key management system, etc.

It should be noted that a process of acquiring the AKMA service data by the UDM network element may vary due to differences in network architecture and standards. In practical applications, the UDM network element may choose an appropriate implementation manner to acquire the AKMA service data based on the actual network architecture.

In some embodiments, the UDM may evaluate data (such as a network state, device performance, and security requirements, etc.) of the terminal to determine whether the parameter updating is needed. That is, the updating reason for the parameter of the terminal may include reasons in network state, device performance, and security requirements, etc.

For example, by taking the updating reason for the parameter of the terminal being a reason in network state as an example for illustration, such as routing indicator updating. In a case of routing indicator updating, the UDM may determine that the terminal needs to perform corresponding parameter updating to ensure to perform communication with the network correctly. A routing indicator is one of the key parameters in a network, which is used to identify and position a routing path in the network. In a case where the routing indicator is updated, the UDM network element may receive a routing indicator updating notification and determine that related terminals affected by the routing indicator updating need to perform parameter updating.

In some embodiments, before acquiring the AKMA service data and the updating reason for the parameter of the terminal, the UDM network element may also receive a notification message for updating the routing indicator of the terminal from a update position unit (UPU), and determine to perform the parameter updating of the terminal according to the notification message.

Exemplarily, in a case where the routing indicator is updated, a corresponding routing indicator updating notification may be generated and sent to a related network entity or network element (such as the UDM network element) through a corresponding signaling protocol or message transmission mechanism. Thus, the UDM network element may receive the routing indicator updating notification and may analyze and process the routing indicator updating notification (such as verifying the validity of the notification and determining the related terminals affected by the routing indicator updating). Furthermore, the UDM network element may determine that the related terminals require to perform parameter updating.

In S102, in response to the AKMA service data indicating that the terminal subscribes to an AKMA service, and the updating reason for the parameter of the terminal being routing indicator updating, initial registration request information for the terminal is sent to an AMF network element.

In some embodiments, the UDM network element may determine whether the terminal subscribes to an AKMA service based on the AKMA service data.

Exemplarily, the UDM network element may determine whether the terminal subscribes to an AKMA service according to data such as subscription state data, subscriber identifier data, etc., in the AKMA service data that is capable of indicating whether the terminal subscribes to an AKMA service.

In some embodiments, the UDM network element may further determine whether the updating reason for the parameter of the terminal is routing indicator updating based on the acquired updating reason for the parameter of the terminal.

Therefore, in a case where the AKMA service data indicates that the terminal subscribes to the AKMA service, and the updating reason for the parameter of the terminal is routing indicator updating, the UDM network element may send the initial registration request information for the terminal to the AMF network element.

The initial registration request information is used to request the terminal to perform initial registration. Thus, the terminal may perform primary authentication and update an AKMA key.

In some embodiments, the UDM network element may further send UDM updating data related to parameter updating performed by the terminal to the AMF network element to trigger the terminal to perform parameter updating.

Based on the technical solutions provided in the present disclosure, it is possible to trigger the update of the AKMA key by causing the terminal to perform initial registration in a case where the updating reason for the parameter of the terminal is determined to be the routing indicator updating and the terminal subscribes to the AKMA. Due to the routing indicator updating, an A-KID on the terminal side may also change, which will affect the AKMA service. Based on the technical solutions of the present disclosure, in a case of determining the routing indicator updating, the terminal may be controlled to perform the initial registration, thereby triggering the update of the AKMA key. In this way, the authentication context after the change of A-KID may be kept consistent, and authentication and key management may be completed according to the A-KID, avoiding interruption or failure of AKMA service and improving the reliability of the AKMA service.

In some embodiments, another communication method is further provided in the present disclosure, which is applied to a terminal. As shown in FIG. 4, the communication method includes the following S201-S202.

In S201, initial registration request information sent from an AMF network element is received, where the initial registration request information is sent from a UDM network element in response to parameter updating of the terminal, the terminal subscribing to an AKMA service, and an updating reason for a parameter of the terminal being routing indicator updating.

In S202, initial registration is performed.

In some embodiments, the terminal may first perform cancellation of registration, and then perform the initial registration after completing the cancellation process of registration.

Exemplarily, the terminal may perform cancellation of registration, and delete a 5G globally unique temporary identifier (5G-GUTI) of the terminal. A 5G-GUTI is a temporary identity for a terminal in the network. It should be understood that the terminal may delete an old 5G-GUTI of the terminal in a case of performing cancellation of registration and acquire a new 5G-GUTI in a case of performing initial registration again.

Accordingly, the terminal may perform the initial registration. During the initial registration process, the terminal side may establish a new registration state with the network side to verify an identity of the terminal, enable the terminal to acquire a network access permission, and acquire a new temporary identity. The initial registration process includes a primary authentication process for the terminal, which may trigger to update the AKMA key.

Exemplarily, FIG. 5 is a diagram of an architecture of an AKMA key provided in the embodiments of the present disclosure. As shown in FIG. 5, the terminal side and the network side complete the primary authentication, and a security key is generated for use in subsequent processes. In some embodiments, the primary authentication may further involve network elements such as AMF/SEAF (Security Anchor Function), AUSF, and UDM, etc., on the network side. During the primary authentication process, a security key K_{AUSF} may be generated, and the key is a shared key between the AUSF network element and the terminal. Furthermore, the terminal and AUSF network element may further generate AKMA key K_{AKMA}, so that the terminal and the AF network element perform traffic protection between the terminal and the AF network element according to the K_{AF} generated via the K_{AKMA}. The terminal and the AUSF network element may respectively acquire K_{AKMA} and KID, where KID is a unique key identifier corresponding to the K_{AKMA}. In this way, the terminal may complete the primary authentication between the terminal side and the network side through performing the initial registration, and generate a new AKMA key during the primary authentication process.

In some embodiments, the terminal may receive UDM updating data related to parameter updating performed by the terminal sent from the AMF network element. Then the parameter updating is performed according to the UDM updating data.

Based on the technical solutions provided in the present disclosure, the terminal may receive the initial registration request information sent from the UDM network element in response to parameter updating of the terminal, the terminal subscribing to the AKMA service, and the updating reason for the parameter of the terminal being routing indicator updating, and perform the initial registration. In this way, in a case of A-KID changes caused by routing indicator being updated, the initial registration may be performed to complete the primary authentication with the network side. During this primary authentication process, a new AKMA key may be generated, thereby avoiding interruption or failure of AKMA services and improving the reliability of the AKMA service.

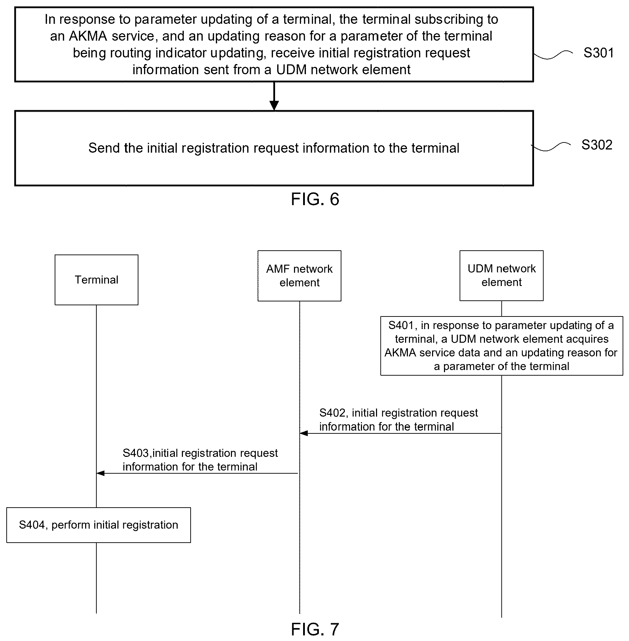

In some embodiments, yet another communication method is further provided in the present disclosure, which is applied to an AMF network element. As shown in FIG. 6, the method includes S301-S302.

In S301, in response to parameter updating of a terminal, the terminal subscribing to an AKMA service, and an updating reason for a parameter of the terminal being routing indicator updating, initial registration request information sent from a UDM network element is received.

In S302, the initial registration request information is sent to the terminal.

It should be understood that the AMF network element sending the initial registration request information to the terminal may trigger the terminal to perform initial registration, thereby enabling the completion of primary authentication between the terminal side and the network side. During this primary authentication process, a new AKMA key may be generated.

In some embodiments, the AMF network element may receive UDM network element updating data related to parameter updating performed by the terminal sent from the UDM network element, and send the UDM updating data related to parameter updating performed by the terminal to the terminal to trigger to perform parameter updating.

In addition, the detailed description of S301-S302 may also refer to the related description of S101-S102 and S201-S202 mentioned above, which will not be repeated herein.

Based on the technical solutions provided in the present disclosure, the AMF network element may receive the initial registration request information sent from the UDM network element in response to the terminal subscribing to the AKMA service, and the updating reason for the parameter of the terminal being routing indicator updating, and send the initial registration request information to the terminal to trigger the terminal to perform initial registration. Therefore, the terminal may complete the primary authentication process to generate a new AKMA key, thereby avoiding an interruptions or failure of the AKMA service and improving the reliability of the AKMA service.

As shown in FIG. 7, FIG. 7 is a schematic diagram of interaction in a communication method provided in the present disclosure. The following will be illustrated in conjunction with FIG. 7.

In S401, in response to parameter updating of a terminal, a UDM network element acquires AKMA service data and an updating reason for a parameter of the terminal.

In S402, the UDM network element sends initial registration request information for the terminal to the AMF network element.

Correspondingly, the AMF network element receives the initial registration request information.

The initial registration request information is sent from the UDM network element in response to the AKMA service data indicating that the terminal subscribes to an AKMA service, and the updating reason for the parameter of the terminal being routing indicator updating.

In S403, the AMF network element sends the initial registration request information to the terminal.

Correspondingly, the terminal may receive the initial registration request information.

In S404, the terminal performs initial registration.

In some embodiments, the UDM network element may further send UDM updating data related to parameter updating performed by the terminal to the AMF network element. Correspondingly, the AMF network element may receive the UDM network element updating data related to parameter updating performed by the terminal to the AMF network element sent from the UDM network element.

Accordingly, the AMF network element may send the UDM updating data related to parameter updating performed by the terminal to the terminal. The terminal receives the UDM updating data and performs parameter updating.

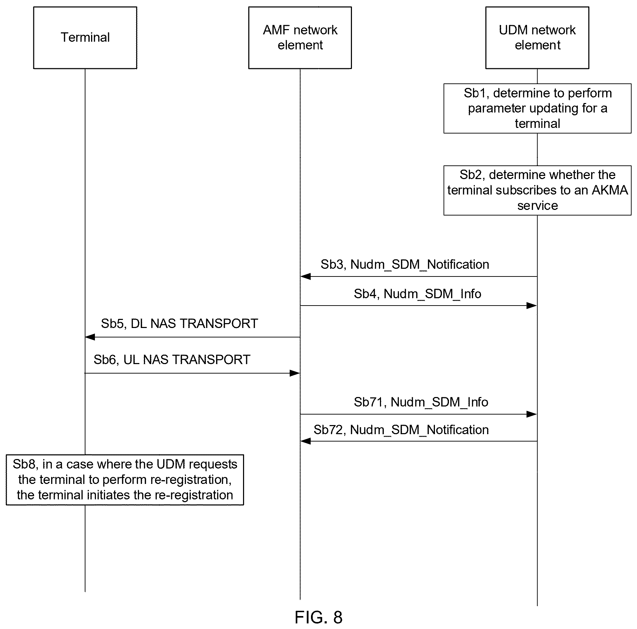

In some embodiments, in combination with the above embodiments, a process of updating a parameter of a terminal through a control plane of UDM is further provided in the present disclosure. As shown in FIG. 8, the process includes the following Sb1-Sb8.

In Sb1, a UDM network element determines to perform parameter updating for a terminal.

In Sb2, the UDM network element determines whether the terminal subscribes to an AKMA service.

Exemplarily, the UDM network elements may acquire AKMA service data, and determine whether the terminal subscribes to the AKMA service through the AKMA service data.

In Sb3, the UDM network element send a Nudm_SDM_Notification message to the AMF network element.

In a case where the parameter updating for the terminal is performed due to "routing indicator updating data" and an updated routing indicator is not supported by the UDM currently registered by the AMF, the UDM should require the terminal to perform re-registration after data is updated. That is, at this time, the UDM updating data may include the indication information that the terminal needs to perform re-registration.

In some embodiments, in a case where the parameter updating for the terminal is performed due to "routing indicator updating data" and the terminal subscribes to the AKMA service, the UDM network element may request the terminal to perform re-registration after updating the data. That is, at this time, the UDM updating data may include the indication information that the terminal needs to perform re-registration.

In Sb4, in a case where the AMF network element determines that the terminal is unreachable, the AMF network element send a Nudm_SDM_Info message to the UDM network element.

In Sb5, the AMF network element sends a DL NAS TRANSPORT message to the terminal.

The terminal is a terminal that needs to perform parameter updating determined by the UDM, and the AMF may be configured to manage the terminal. The DL NAS TRANSPORT message includes a transparent container received from the UDM.

In Sb6, the terminal sends a UL NAS TRANSPORT message including acknowledgement (Ack) information to the AMF network element.

In a case where the security check for the UDM updating data by the terminal is successful, and the UDM requests the terminal to send a confirmation message to the UDM, the terminal may transmit a UL NAS TRANSPORT message including Ack information to the AMF.

In Sb71, the AMF network element sends a Nudm_SDM_lnfo request message to the UDM.

The Nudm_SDM_lnfo request message may include or carry the Ack information from the terminal.

In Sb72, the UDM network element sends a Nudm_SDM_Notification message to the AMF network element.

In Sb8, in a case where the UDM requests the terminal to perform re-registration, the terminal initiates the re-registration.

If the UDM requests a UE to perform re-registration, the terminal may wait until it returns to a radio resource control idle (RRC_IDLE) state, and then the terminal may first perform the cancellation of registration, delete a 5G-GUTI of the terminal, and then initiate the registration process. The registration process may be a registration process described in related standards such as TS 24.501 standard.

In addition, a detailed description of Sb1-Sb8 may further refer to the related description of Sa1-Sa7 mentioned above, which will not be repeated herein.

The foregoing mainly introduces the solutions provided in the present disclosure from the perspective of interaction between various devices or network elements. It can be understood that, in order to implement the above functions, the various devices or network elements include corresponding hardware structures and/or software modules for implementing various functions. Those skilled in the art should easily realize that the present disclosure may be implemented in the form of hardware or a combination of hardware and computer software in combination with algorithms and steps described in the embodiments disclosed in the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

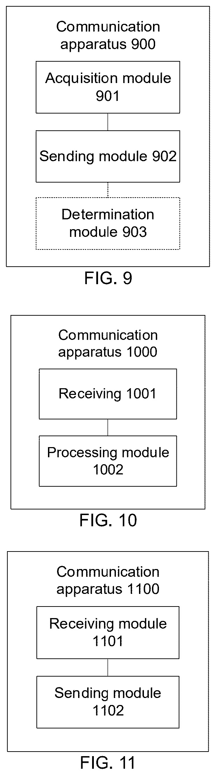

FIG. 9 is a schematic diagram of composition of a communication apparatus provided in the embodiments of the present disclosure. As shown in FIG. 9, the communication apparatus 900 may be applied to a UDM network element, and includes an acquisition module 901 and a sending module 902. In some embodiments, the communication apparatus 900 may further include a determination module 903.

The acquisition module 901 is configured, in response to parameter updating of a terminal, to acquire authentication and key management for application (AKMA) service data and an updating reason for a parameter of the terminal.

The sending module 902 is configured, in response to the AKMA service data indicating that the terminal subscribes to an AKMA service, and the updating reason for the parameter of the terminal being routing indicator updating, to send initial registration request information for the terminal to an access and mobility management function (AMF) network element, where the initial registration request information is used to request the terminal to perform initial registration.

In some embodiments, the sending module 902 is further configured to send UDM updating data related to parameter updating performed by the terminal to the AMF network element to trigger the terminal to perform parameter updating.

In some embodiments, the acquisition module 901 is further configured to receive a notification message for updating the routing indicator of the terminal from a update position unit (UPU). The determination module 903 is configured to determine to perform the parameter updating of the terminal according to the notification message.

More detailed descriptions of the acquisition module 901, the sending module 902, and the determination module 903 mentioned above, as well as more detailed descriptions of various technical features and beneficial effects thereof, etc., may refer to the corresponding parts of method embodiments mentioned above, which will not be repeated herein.

FIG. 10 is a schematic diagram of composition of a communication apparatus provided in the embodiments of the present disclosure. As shown in FIG. 10, the communication apparatus 1000 may be applied to a terminal, and includes a receiving module 1001 and a processing module 1002.

The receiving module 1001 is configured to receive initial registration request information sent from an AMF network element, where the initial registration request information is sent from a UDM network element in response to parameter updating of the terminal, the terminal subscribing to an AKMA service, and an updating reason for a parameter of the terminal being routing indicator updating.

The processing module 1002 is configured to perform initial registration.

In some embodiments, the receiving module 1001 is further configured to receive UDM updating data related to parameter updating performed by the terminal sent from the AMF network element. The processing module 1002 is further configured to perform parameter updating according to the UDM updating data.

In some embodiments, the processing module 1002 is further configured to perform cancellation of registration before performing initial registration.

More detailed descriptions of the receiving module 1001, and the processing module 1002 mentioned above, as well as more detailed descriptions of various technical features and beneficial effects thereof, etc., may refer to the corresponding parts of method embodiments mentioned above, which will not be repeated herein.

FIG. 11 is a schematic diagram of composition of a communication apparatus provided in the embodiments of the present disclosure. As shown in FIG. 11, the communication apparatus 1100 may be applied to an AMF network element, and includes a receiving module 1101 and a sending module 1102.

The receiving module 1101 is configured, in response to parameter updating of a terminal, the terminal subscribing to an AKMA service, and an updating reason for a parameter of the terminal being routing indicator updating, receive initial registration request information sent from a UDM network element.

The sending module 1102 is configured to send the initial registration request information to the terminal.

In some embodiments, the receiving module 1101 is further configured to receive UDM network element updating data related to parameter updating performed by the terminal sent from the UDM network element. The sending module 1102 is further configured to send the UDM updating data related to parameter updating performed by the terminal to the terminal to trigger the terminal to perform parameter updating.

More detailed descriptions of the receiving module 1101, and the sending module 1102 mentioned above, as well as more detailed descriptions of various technical features and beneficial effects thereof, etc., may refer to the corresponding parts of method embodiments mentioned above, which will not be repeated herein.

It should be noted that the modules in FIG. 9, FIG. 10, or FIG. 11 can also be referred to as units, for example, the sending module may be referred to as a sending unit. In addition, in the embodiments shown in FIG. 9, FIG. 10 or FIG. 11, the names of the various modules may not be the names shown in the figures. For example, the sending module may also be referred to as a communication module, and the receiving module may also be referred to as a communication module.

If the various units or modules in FIG. 9, FIG. 10 or FIG. 11 are implemented in the form of the software functional unit and sold or used as independent products, they may be stored in a computer-readable storage medium. Based on this understanding, the technical solutions of the present disclosure may be essentially, or a part of the technical solutions of the present disclosure that contributes to the prior arts, or all or a portion of the technical solutions of the present disclosure may be, embodied in the form of a software product, and the computer software product may be stored in a storage medium including couples of instructions, thus to enable a computer device (may be a personal computer, a server, a network device, etc.) or a processor to perform all or a portion of steps of the method in the various embodiments of the present disclosure. The storage medium storing a computer software product includes various types of media capable of storing program codes, such as a USB flash drive, a mobile disk, a read-only memory (ROM), a random-access memory (RAM), a magnetic disk, or an optical disk, etc.

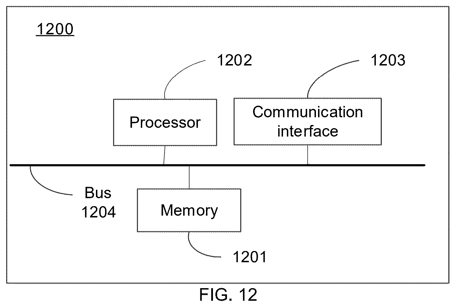

In a case of implementing the functions of the above-mentioned integrated modules in the form of hardware, a structural schematic diagram of a communication device is provided in the embodiments of the present disclosure, and the communication device may include the above-mentioned communication apparatus 900, communication apparatus 1000 or communication apparatus 1100. As shown in FIG. 12, the communication device 1200 includes: a memory 1201, a processor 1202, a communication interface 1203, and a bus 1204.

The memory 1201 may be a read-only memory (ROM) or other types of static storage devices that can store static information and instructions, a random access memory (RAM), or other types of dynamic storage devices that can store dynamic information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 1202 may implement or perform various exemplary logical blocks, modules and circuits described in combination with the present disclosure. The processor 1202 may be a central processor, a general-purpose processor, a digital signal processor, an application specific integrated circuit, a field programmable gate array, or other programmable logic component, a transistor logic component, a hardware assembly, or any combination thereof. The processor 1202 may also implement or execute various illustrative logical blocks, modules and circuits described in conjunction with the disclosed contents of the present disclosure. The processor 1202 may also be a combination that implements computing functions, such as a combination containing one or more microprocessors, a combination of a DSP (digital signal processor) and a microprocessor, etc.

The communication interface 1203 is configured to connect to other devices through a communication network. The communication network may be the Ethernet, a radio access network, a wireless local area networks (WLAN), or the like.

In some embodiments, the memory 1201 may exist independently from the processor 1202, and the memory 1201 may be connected to the processor 1202 through the bus 1204 for storing instructions or program codes. In a case where the processor 1202 invokes and executes instructions or program codes stored in the memory 1201, the method provided in the embodiments of the present disclosure may be implemented.

In some embodiments, the memory 1201 may also be integrated with the processor 1202.

The bus 1204 may be an extended industry standard architecture (EISA) bus, or the like. The bus 1204 may be classified as an address bus, a data bus, a control bus, or the like. For ease of representation, only one bold line is used in FIG. 12 for representing the bus 1204, but it does not mean that there is only one bus or one type of bus.

Through the description of the above implementations, those of ordinary skill in the art can clearly understand that for the convenience and simplicity of the description, the division of the above functional modules is given merely as an example. In practical applications, the above functions can be allocated to different functional modules according to requirements, that is, the internal structure of the device or apparatus may be divided into different functional modules to complete all or part of the functions described above.

A computer-readable storage medium is further provided in the embodiments of the present disclosure. All or part of the processes in the above method embodiments may be implemented by related information of an information hardware indicated by computer instructions. The programs may be stored in the above-mentioned computer-readable storage medium, and upon being executed, the programs may include the processes as described in the above method embodiments. The computer-readable storage medium may be an internal storage unit of a device or an apparatus in any one of the aforementioned embodiments, such as a hard disk or a memory of a computer device. The above-mentioned computer-readable storage medium may also be an external storage device of the above-mentioned device or apparatus, such as a plug-in hard disk, a smart media card (SMC), a secure digital (SD) card, a flash card, etc., equipped on the above-mentioned device or apparatus. Furthermore, the above-mentioned computer-readable storage medium may include both an internal storage unit and an external storage device of the above-mentioned device or apparatus. The above-mentioned computer-readable storage medium is configured to store the above-mentioned computer programs and other programs and data required by the above-mentioned device or apparatus. The above-mentioned computer-readable storage medium may further be configured to temporarily store data that has been output or is to be output. The above-mentioned computer-readable storage medium may include a non-transitory computer-readable storage medium.

A computer program product is further provided in the embodiments of the present disclosure. The computer product includes computer programs that, upon being run on a computer, enable the computer to perform any one of the method provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, "comprise/comprises/comprising" does not exclude other components or steps, and "a/an" or "one" does not exclude a number of a plurality. A single processor or other units may implement couples of functions listed in the claims. Some measures are recorded in different dependent claims, but this does not mean that these measures cannot be combined to produce good effects.

Although the present disclosure is described in conjunction with some features and embodiments thereof, obviously, various modifications and combinations can be made thereto without departing from the spirit and scope of the present disclosure. Accordingly, the specification and accompanying drawings herein are merely exemplary illustration of the present disclosure defined by the claims, and are deemed to cover any and all modifications, variations, combinations or equivalents within the scope of the present disclosure. Obviously, those skilled in the art can make various modifications and variations to the present disclosure without departing from the scope of the present disclosure. In this way, if these modifications and variations of the present disclosure fall within the scope of the claims of the present disclosure and their equivalent technologies, the present disclosure is also intended to include these modifications and variations.

The above descriptions are merely specific implements of the present disclosure, but the protection scope of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. A communication method, applied to a unified data management function (UDM) network element, **characterized in that** the method comprises:
in response to parameter updating of a terminal, acquiring authentication and key management for application (AKMA) service data and an updating reason for a parameter of the terminal; and
in response to the AKMA service data indicating that the terminal subscribes to an AKMA service, and the updating reason for the parameter of the terminal being routing indicator updating, sending initial registration request information for the terminal to an access and mobility management function (AMF) network element, wherein the initial registration request information is used to request the terminal to perform initial registration.

2. The method according to claim 1, further comprising:
sending UDM updating data related to parameter updating performed by the terminal to the AMF network element to trigger the terminal to perform parameter updating.

3. The method according to claim 1, wherein before acquiring the AKMA service data and the updating reason for the parameter of the terminal, the method further comprises:
receiving a notification message for updating the routing indicator of the terminal from a update position unit (UPU); and
determining to perform the parameter updating of the terminal according to the notification message.

4. A communication method, applied to a terminal, **characterized in that** the method comprises:
receiving initial registration request information sent from an access and mobility management function (AMF) network element, wherein the initial registration request information is sent from a unified data management function (UDM) network element in response to parameter updating of the terminal, the terminal subscribing to an authentication and key management for application (AKMA) service, and an updating reason for a parameter of the terminal being routing indicator updating; and
performing initial registration.

5. The method according to claim 4, further comprising:
receiving UDM updating data related to parameter updating performed by the terminal sent from the AMF network element;
performing parameter updating according to the UDM updating data.

6. The method according to claim 4, wherein before performing the initial registration, the method further comprises:
performing cancellation of registration.

7. A communication method, applied to an access and mobility management function (AMF) network element, **characterized in that** the method comprises:
in response to parameter updating of a terminal, the terminal subscribing to an authentication and key management for application (AKMA) service, and an updating reason for a parameter of the terminal being routing indicator updating, receiving initial registration request information sent from a unified data management function (UDM) network element; and
sending the initial registration request information to the terminal.

8. The method according to claim 7, further comprising:
receiving UDM network element updating data related to parameter updating performed by the terminal sent from the UDM network element; and
sending the UDM updating data related to parameter updating performed by the terminal to the terminal to trigger the terminal to perform parameter updating.

9. A communication device, **characterized by** comprising: a memory and a processor, wherein the memory is coupled to the processor, the memory is configured to store instructions executable for the processor, and the processor is configured, upon the instructions being executed, to perform the method according to any one of claims 1 to 8.

10. A computer-readable storage medium, **characterized in that** computer instructions are stored on the computer-readable storage medium, upon the computer instructions being executed on a processor, the processor is enabled to perform the method according to any one of claims 1 to 8.

11. A computer program product, **characterized in that** the computer program product comprises computer programs that, upon being run on a computer, enable the computer to execute the method according to any one of claims 1 to 8.
